# EUROPÄISCHE PATENTSCHRIFT

(11) **EP 3 807 703 B1**
(45) Veröffentlichungstag und Bekanntmachung des Hinweises auf die Patenterteilung: **27.12.2023**
(21) Anmeldenummer: 19731683.9
(22) Anmeldetag: 13.06.2019
(51) Int. Cl.: G02B 27/01

(54) **GERÄT ZUM GENERIEREN EINES VIRTUELLEN BILDES**
DEVICE FOR GENERATING A VIRTUAL IMAGE
APPAREIL POUR LA GÉNÉRATION D'UNE IMAGE VIRTUELLE

(30) Priorität: 15.06.2018 EP 18465535
(43) Veröffentlichungstag der Anmeldung: 21.04.2021
(73) Patentinhaber: Continental Automotive Technologies GmbH, 30165 Hannover (DE)
(72) Erfinder: KOLLOCH, Ulrich, 65824 Schwalbach a. Ts. (DE); MARKUS, Ferenc, 65824 Schwalbach a. Ts. (DE); BUERGER, Arnd, 65824 Schwalbach a. Ts. (DE)
(74) Vertreter: Continental Corporation
(86) Internationale Anmeldenummer: PCT/EP2019/065609
(87) Internationale Veröffentlichungsnummer: WO 2019/238888

(56) Entgegenhaltungen:
- WO-A1-2017/060665
- US-A1- 2011 255 303
- US-A1- 2014 140 653
- US-A1- 2016 320 621
- US-A1- 2017 038 593
- US-B2- 9 989 760

## Beschreibung

Die vorliegende Erfindung betrifft ein Gerät zum Generieren eines virtuellen Bildes.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Der in der US 2016/0124223 A1 genutzte Lichtwellenleiter ist auf eine Lichtwellenlänge optimiert. Soll ein farbiges virtuelles Bild dargestellt werden, sind zwei oder mehr parallel zueinander angeordnete Teillichtwellenleiter vorzusehen, die jeweils wellenlängenoptimiert sind. Die Teillichtwellenleiter weisen ihrerseits jeweils ein Einkoppelhologramm, ein Falthologramm und ein Auskoppelhologramm auf. Damit das Licht innerhalb der Lichtwellenleiter mittels totaler innerer Reflexion propagieren kann, sind Zwischenräume zwischen den Lichtwellenleitern vorhanden. In den Zwischenräumen ist Luft oder ein anderes Medium angeordnet, dessen Brechungsindex vom Brechungsindex der Teillichtwellenleiter abweicht. Zur Bilderzeugung wird eine bildgebende Einheit so angeordnet, dass das von ihr abgegebene Licht exakt unter dem für die totale innere Reflexion erforderlichen Winkelbereich in das Einkoppelhologramm einstrahlt. Für eine Fixierung in einem Kraftfahrzeug muss das ganze System gehaltert und mit Befestigungsmöglichkeiten ausgestattet werden.

Die einzelnen Lichtwellenleiter bestehen aus Glasplatten und weisen nur eine begrenzte Stabilität gegen Bruch auf. Schwingungen oder Erschütterungen, die einen Kontakt der Lichtwellenleiter zu einem benachbarten Element, eine Überbeanspruchung im Bereich der Fixierung oder eine Verwindung im Fahrzeug zur Folge haben, können dementsprechend zu einer Beschädigung führen.

US2017038593 und US2016320621 offenbaren Geräte zum Generieren eines virtuellen Bildes. US2011255303 offenbart eine reflektiv ausgestaltete, verklebende Beschichtung.

Es ist eine Aufgabe der vorliegenden Erfindung, einen verbesserten Aufbau eines Geräts zum Generieren eines virtuellen Bildes vorzuschlagen.

Diese Aufgabe wird durch ein Gerät mit den Merkmalen des Anspruchs 1 gelöst. Bevorzugte Ausgestaltungen der Erfindung sind Gegenstand der abhängigen Ansprüche.

Gemäß einem ersten Aspekt der Erfindung weist ein Gerät zum Generieren eines virtuellen Bildes eine bildgebende Einheit zum Erzeugen eines Bildes und einen Lichtwellenleiter zum Aufweiten einer Austrittspupille auf, wobei eine untere Begrenzungsfläche des Lichtwellenleiters mit einer Beschichtung versehen ist und die bildgebende Einheit an der Beschichtung angeordnet ist.

Bei der erfindungsgemäßen Lösung wird eine Beschichtung an der unteren Begrenzungsfläche des Lichtwellenleiters als Befestigungsfläche für die bildgebende Einheit genutzt.

Die bildgebende Einheit ist mit der Beschichtung verklebt, wodurch auf aufwändige Befestigungslösungen verzichtet werden kann. Zudem schützt die Beschichtung vor der Bildung von Kondenswasser an der unteren Begrenzungsfläche. Indem die bildgebende Einheit an der Beschichtung angeordnet ist und sich gemeinsam mit dem Lichtwellenleiter bewegt, wird eine Toleranzunempfindlichkeit und eine Entkopplung vom Fahrzeug geschaffen.

Gemäß der Erfindung ist die Beschichtung in Richtung des Lichtwellenleiters reflektiv ausgestaltet. Durch die Verwendung einer unterseitigen, reflektiven Beschichtung kann auf einen Luftspalt unterhalb des Lichtwellenleiters zur Gewährleistung von totaler innerer Reflexion verzichtet werden. Dies führt zu einem kompakteren Aufbau.

Gemäß einem Aspekt der Erfindung weist der Lichtwellenleiter zwei oder mehr an unterschiedliche Wellenlängen angepasste flächige Teillichtwellenleiter auf, die parallel zueinander und voneinander beabstandet angeordnet sind. Durch die Verwendung von zwei oder mehr Teillichtwellenleitern, die jeweils wellenlängenoptimiert sind, können mehrfarbige virtuelle Bilder dargestellt werden.

Gemäß einem Aspekt der Erfindung sind die zwei oder mehr Teillichtwellenleiter parallel verschoben zueinander angeordnet. Auf diese Weise kann ein System realisiert werden, bei dem eine Abstrahlung der Bildinformation schräg zur Oberfläche der Teillichtwellenleiter erfolgt. Eine solche Abstrahlung eignet sich besonders für den Einsatz in Kraftfahrzeugen, wo verhältnismäßig wenig Bauraum zur Verfügung steht.

Gemäß einem Aspekt der Erfindung sind die bildgebende Einheit und der Lichtwellenleiter in einem Gehäuse angeordnet. In dem Gehäuse kann sich auch eine Elektronik einer Steuereinheit der bildgebenden Einheit befinden. Durch den beschriebenen Aufbau entsteht ein sehr kompaktes und robustes System.

Gemäß einem Aspekt der Erfindung sind die bildgebende Einheit und der Lichtwellenleiter entkoppelt im Gehäuse verbaut. Durch den entkoppelten Verbau in einem unabhängigen Gehäuse kann eine mechanische Überlastung vermieden und ein störender Einfluss durch das Fahrzeug reduziert werden.

Gemäß einem Aspekt der Erfindung weist das Gerät einen verstellbaren Umlenkspiegel zum Umlenken des von der bildgebenden Einheit ausgehenden Lichts in Richtung zumindest eines Einkoppelhologramms des Lichtwellenleiters auf. Der Umlenkspiegel kann beispielsweise um zwei Achsen drehbar gelagert sein. Vorzugsweise ist der Umlenkspiegel an der Beschichtung oder an der bildgebenden Einheit angeordnet. Durch den Einsatz des zwischengeschalteten Umlenkspiegels kann die Position der bildgebenden Einheit in gewissen Grenzen frei gewählt und damit vorhandener Bauraum besser ausgenutzt werden. Zugleich kann der Umlenkspiegel auch für eine Verstellung der Eyebox genutzt werden.

Vorzugsweise wird ein erfindungsgemäßes Gerät in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln. Selbstverständlich kann die erfindungsgemäße Lösung auch in anderen Umgebungen oder für andere Anwendungen genutzt werden, z.B. in Lastkraftwagen, in der Bahntechnik und im ÖPNV, bei Kranen und Baumaschinen, etc.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug; und
- Fig. 5: zeigt schematisch eine Ausführungsform eines erfindungsgemäßen Geräts zum Generieren eines virtuellen Bildes.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

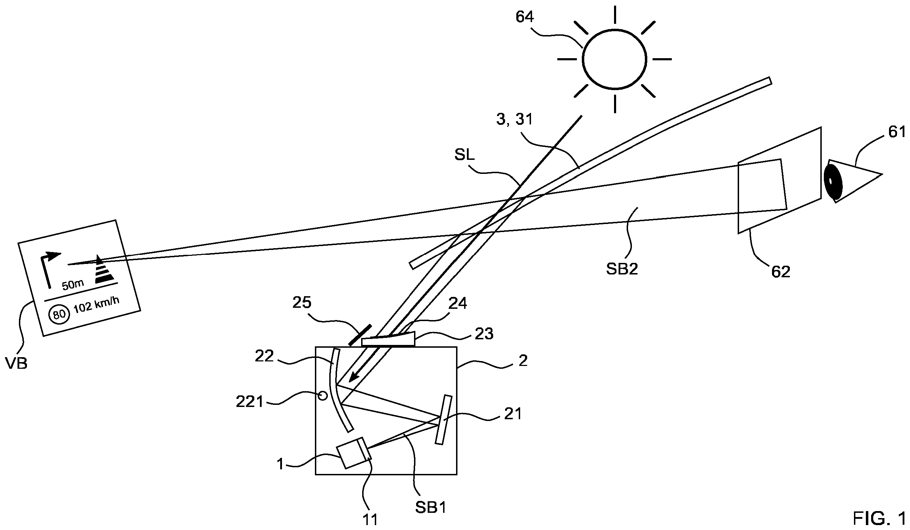

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepasst und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

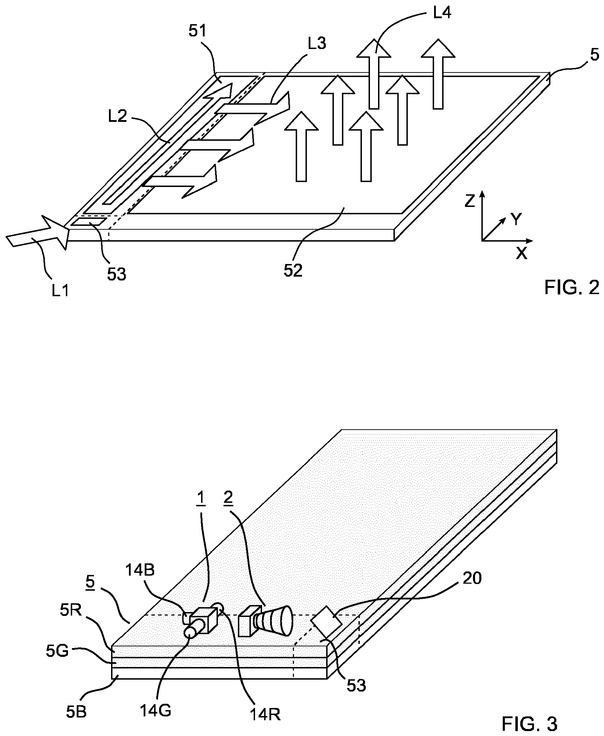

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2 . In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

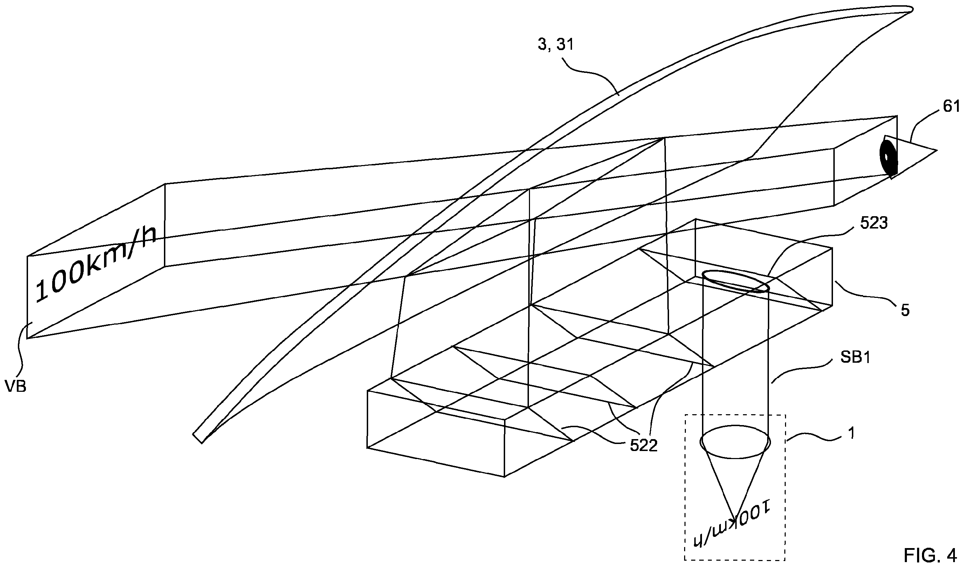

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

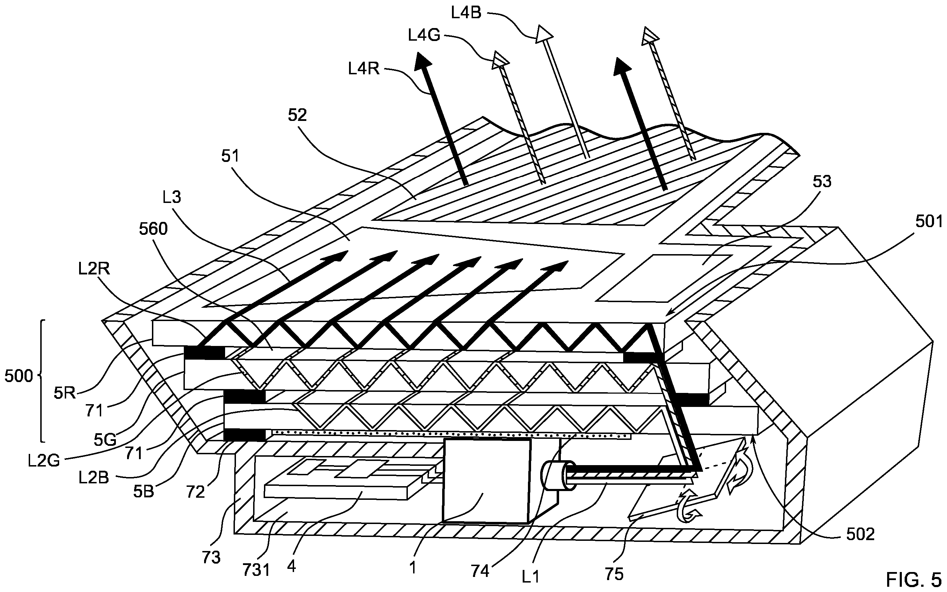

Fig. 5 zeigt schematisch eine Ausführungsform eines erfindungsgemäßen Geräts zum Generieren eines virtuellen Bildes. Zu sehen ist das Gerät in geschnittener Darstellung. Die Teillichtwellenleiter 5R, 5G, 5B sind in der dargestellten Variante parallel zueinander angeordnet und relativ zueinander verschoben. Der Stapel 500 von Teillichtwellenleitern 5R, 5G, 5B ist separat schwingungsstabil aufgebaut. Dazu sind die Teillichtwellenleiter 5R, 5G, 5B durch Verbindungselemente 71 miteinander verbunden, die in Zwischenräumen 560 zwischen den Teillichtwellenleitern 5R, 5G, 5B angeordnet sind. Durch die Verbindungselemente 71 werden die Teillichtwellenleiter 5R, 5G, 5B in einem definierten Abstand gehalten. Der unterste Lichtwellenleiter 5B ist mittels einem Verbindungselement 72 mit einem Gehäuse 73 verbunden und auf Abstand gehalten. Auf der unteren Begrenzungsfläche 502 des untersten Teillichtwellenleiters 5B ist eine Beschichtung 74 angeordnet. Diese ist zum Teillichtwellenleiter 5B hin spiegelnd ausgelegt, sodass dieser auch ohne angrenzende Luftschicht an seiner unteren Begrenzungsfläche 502 eine totale innere Reflexion bewirkt. Die Beschichtung 74 erstreckt sich über einen großen Teil der Fläche des unteren Teillichtwellenleiters 5B, nicht aber in dem Bereich, in dem das Einkoppelhologramm 53 angeordnet ist. Nach unten hin ist die Beschichtung 74 nicht reflektierend ausgelegt. Auf ihrer Unterseite ist die bildgebende Einheit 1 angeordnet. Im Ausführungsbeispiel ist sie dort angeklebt. Eine Steuereinheit 4 ist ebenfalls unterhalb der Beschichtung 74 angeordnet. Im Ausführungsbeispiel ist die Steuereinheit 4 in einem Hohlraum 731 des Gehäuses 73 angeordnet. Ebenfalls unterhalb des untersten Teillichtwellenleiters 5B ist ein Umlenkspiegel 75 angeordnet. Er ist, wie mittels der Pfeile angedeutet, um zwei Achsen drehbar gelagert.

Das von der bildgebenden Einheit 1 erzeugte Licht L1 weist die durch unterschiedliche Schraffur angedeuteten Farben Rot (schwarz dargestellt), Grün (schraffiert dargestellt) und Blau (weiß dargestellt) auf. Dem Fachmann sind weitere Farbkombinationen bekannt, mit denen sich farbige Bilder realisieren lassen. Die jeweiligen Strahlengänge sind nur der Anschaulichkeit halber räumlich separiert dargestellt. Das Licht L1 wird vom Umlenkspiegel 75 auf die das jeweilige Einkoppelhologramm 53 aufweisenden Bereiche der Teillichtwellenleiter 5R, 5G, 5B geleitet. Für den oberen Teillichtwellenleiter 5R ist das Einkoppelhologramm 53 angedeutet, das sich im Ausführungsbeispiel an der oberen Begrenzungsfläche 501 befindet. Das eigekoppelte Licht L2R, L2G, L2B propagiert durch totale innere Reflexion im Teillichtwellenleiter 5R, 5G, 5B, in der Abbildung nach links. Dies ist durch Zickzacklinien angedeutet. Dort wird es mittels eines Falthologramms 51 als Licht L3 nach in der Abbildung schräg rechts oben geleitet. Von dort gelangt es zu den Auskoppelhologrammen 52 und verlässt als in zwei Dimensionen aufgeweitetes Licht L4R, L4G, L4B den jeweiligen Teillichtwellenleiter 5R, 5G, 5B im Bereich des jeweiligen Auskoppelhologramms 52. Auch dies ist mittels unterschiedlich schraffierter Pfeile angedeutet.

### Bezugszeichenliste

- 1: Bildgenerator/Bildgebende Einheit
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie
- 25: Blendschutz

- 3: Spiegeleinheit
- 31: Windschutzscheibe

- 4: Steuereinheit

- 5: Lichtwellenleiter
- 5R, 5G, 5B: Teillichtwellenleiter
- 500: Stapel von Teillichtwellenleitern
- 501: Obere Begrenzungsfläche
- 502: Untere Begrenzungsfläche
- 51: Falthologramm
- 52: Auskoppelhologramm
- 522: Spiegelebene
- 523: Spiegelebene
- 53: Einkoppelhologramm
- 560: Zwischenraum

- 61: Auge/ Betrachter
- 62: Eyebox
- 64: Störlichtquelle

- 71, 72: Verbindungselement
- 73: Gehäuse
- 731: Hohlraum
- 74: Beschichtung
- 75: Umlenkspiegel

- L1...L4: Licht
- L2R, L2G, L2B: Eigekoppeltes Licht
- L4R, L4G, L4B: Aufgeweitetes Licht
- SB1, SB2: Strahlenbündel
- SL: Sonnenlicht
- VB: Virtuelles Bild

## Patentansprüche

1. Gerät zum Generieren eines virtuellen Bildes (VB), mit:
- einer bildgebenden Einheit (1) zum Erzeugen eines Bildes; und
- einem Lichtwellenleiter (5, 5R, 5G, 5B) zum Aufweiten einer Austrittspupille;
**dadurch gekennzeichnet, dass** eine untere Begrenzungsfläche (502) des Lichtwellenleiters (5, 5R, 5G, 5B) mit einer in Richtung des Lichtwellenleiters (5, 5R, 5G, 5B) reflektiv ausgestalteten Beschichtung (74) versehen ist und die bildgebende Einheit (1) mit der Beschichtung (74) verklebt ist.

2. Gerät gemäß Anspruch 1, wobei der Lichtwellenleiter (5) zwei oder mehr an unterschiedliche Wellenlängen angepasste flächige Teillichtwellenleiter (5R, 5G, 5B) aufweist, die parallel zueinander und voneinander beabstandet angeordnet sind.

3. Gerät gemäß Anspruch 2, wobei die zwei oder mehr Teillichtwellenleiter (5R, 5G, 5B) parallel verschoben zueinander angeordnet sind.

4. Gerät gemäß einem der vorherigen Ansprüche, wobei die bildgebende Einheit (1) und der Lichtwellenleiter (5, 5R, 5G, 5B) in einem Gehäuse (73) angeordnet sind.

5. Gerät gemäß Anspruch 4, wobei die bildgebende Einheit (1) und der Lichtwellenleiter (5, 5R, 5G, 5B) entkoppelt im Gehäuse (73) verbaut sind.

6. Gerät gemäß einem der vorherigen Ansprüche, wobei das Gerät einen verstellbaren Umlenkspiegel (75) zum Umlenken des von der bildgebenden Einheit (1) ausgehenden Lichts (L1) in Richtung zumindest eines Einkoppelhologramms (53) des Lichtwellenleiters (5, 5R, 5G, 5B) aufweist.

7. Gerät gemäß Anspruch 6, wobei der Umlenkspiegel (75) an der Beschichtung (74) oder an der bildgebenden Einheit (1) angeordnet ist.

8. Fortbewegungsmittel mit einem Gerät gemäß einem der Ansprüche 1 bis 9 zum Generieren eines virtuellen Bildes (VB) für einen Bediener des Fortbewegungsmittels.

## Claims

1. Device for generating a virtual image (VB), having:
- a picture-generating unit (1) for generating an image; and
- an optical waveguide (5, 5R, 5G, 5B) for expanding an exit pupil;
**characterized in that** a lower boundary surface (502) of the optical waveguide (5, 5R, 5G, 5B) is provided with a coating (74) which is reflective in the direction of the optical waveguide (5, 5R, 5G, 5B) and the picture-generating unit (1) is adhesively bonded to the coating (74).

2. Device according to Claim 1, wherein the optical waveguide (5) has two or more two-dimensional partial optical waveguides (5R, 5G, 5B), which are adapted to different wavelengths and are arranged parallel to one another with mutual spacing.

3. Device according to Claim 2, wherein the two or more partial optical waveguides (5R, 5G, 5B) are arranged such that they are shifted parallel to one another.

4. Device according to any of the preceding claims, wherein the picture-generating unit (1) and the optical waveguide (5, 5R, 5G, 5B) are arranged in a housing (73).

5. Device according to Claim 4, wherein the picture-generating unit (1) and the optical waveguide (5, 5R, 5G, 5B) are installed decoupled in the housing (73).

6. Device according to any of the preceding claims, wherein the device has an adjustable deflection mirror (75) for deflecting the light (L1) emanating from the picture-generating unit (1) in the direction of at least one coupling-in hologram (53) of the optical waveguide (5, 5R, 5G, 5B).

7. Device according to Claim 6, wherein the deflection mirror (75) is arranged at the coating (74) or at the picture-generating unit (1).

8. Means of transport having a device according to any of Claims 1 to 9 for generating a virtual image (VB) for a user of the means of transport.

## Revendications

1. Appareil permettant de générer une image virtuelle (VB), comprenant :
- une unité d'imagerie (1) pour générer une image ; et
- un guide d'ondes optiques (5, 5R, 5G, 5B) pour élargir une pupille de sortie ;
**caractérisé en ce qu'**une surface de délimitation inférieure (502) du guide d'ondes optiques (5, 5R, 5G, 5B) est munie d'un revêtement (74) conçu de manière réfléchissante en direction du guide d'ondes optiques (5, 5R, 5G, 5B), et l'unité d'imagerie (1) est collée au revêtement (74).

2. Appareil selon la revendication 1, dans lequel le guide d'ondes optiques (5) présente deux ou plusieurs guides d'ondes optiques partiels (5R, 5G, 5B) plans, adaptés à différentes longueurs d'onde, qui sont disposés en parallèle les uns aux autres et de manière espacée les uns des autres.

3. Appareil selon la revendication 2, dans lequel les deux ou plusieurs guides d'ondes optiques partiels (5R, 5G, 5B) sont disposés de manière décalée en parallèle les uns par rapport aux autres.

4. Appareil selon l'une quelconque des revendications précédentes, dans lequel l'unité d'imagerie (1) et le guide d'ondes optiques (5, 5R, 5G, 5B) sont disposés dans un boîtier (73).

5. Appareil selon la revendication 4, dans lequel l'unité d'imagerie (1) et le guide d'ondes optiques (5, 5R, 5G, 5B) sont installés dans le boîtier (73) de manière découplée.

6. Appareil selon l'une quelconque des revendications précédentes, dans lequel l'appareil présente un miroir de déviation réglable (75) pour dévier la lumière (L1) émanant de l'unité d'imagerie (1) en direction d'au moins un hologramme d'injection (53) du guide d'ondes optiques (5, 5R, 5G, 5B).

7. Appareil selon la revendication 6, dans lequel le miroir de déviation (75) est disposé au niveau du revêtement (74) ou de l'unité d'imagerie (1).

8. Moyen de locomotion, comprenant un appareil selon l'une quelconque des revendications 1 à 9 pour générer une image virtuelle (VB) pour un opérateur du moyen de locomotion.
